# EUROPEAN PATENT APPLICATION

(11) **EP 3 560 335 A1**
(43) Date of publication of application: **30.10.2019**
(21) Application number: 18169994.3
(22) Date of filing: 28.04.2018
(51) Int. Cl.: A01N 27/00, A01M 13/00, A23B 7/144, A23B 7/152, A01P 21/00

(54) **APPARATUS AND METHOD FOR CONTROLLING AN AMOUNT OF ETHYLENE**

(71) Applicant: Linde Aktiengesellschaft, 80331 München (DE)
(72) Inventor: HUBER, Saskia, 85757 Karlsfeld b Muenchen (DE)
(74) Representative: Hofmann, Andreas

(57) **Abstract**

In order to overcome the limitations and problems that earlier apparatus and earlier methods have experienced, an apparatus (10) for controlling an amount of ethylene (C₂H₄) in a space (12) is proposed, said apparatus (10) comprising:
- a source (18) of the ethylene (C₂H₄);
- a distribution conduit (20) having a first end in fluid communication with the source (18) and a second end extending into the space (12) for delivery of the ethylene (C₂H₄) to the space (12);;
- a sensor (32) exposed to the space (12) for generating a signal of a concentration of the ethylene (C₂H₄) sensed and already present in the space (12); and
- a controller (28) in communication with the source (18) and the sensor (32) for dosing an amount of the ethylene (C₂H₄) from the source (18) through said distribution conduit (20) into the space (12) responsive to the signal from the sensor (32).

A related method of controlling an amount of ethylene (C₂H₄) in a space (12) is also proposed.

## Description

### Technical field of the present invention

The present invention relates to an apparatus and to a method of using ethylene alone or in combination with other substances to control ripening, sprouting and growth of fruits and vegetables.

### Technological background of the present invention

Ethylene (IUPAC name = International Union of Pure and Applied Chemistry name: ethene) is a hydrocarbon which has the formula C₂H₄ or H₂C=CH₂. It is the simplest alkene (a hydrocarbon with carbon-carbon double bounds).

Ethylene is a gas known and used for accelerating ripening and inhibiting sprouting for different types of fruits and vegetables. Accordingly, known apparatus and methods attempt to control a concentration of ethylene in order to provide a cost effective and optimum outcome of accelerating the ripening and inhibiting sprouting. In the European Union (EU) for example, ethylene is considered and listed as an active substance or product for plant protection.

The use of ethylene for plant protection products is regulated in Europe under an EU directive. Therefore, any application of ethylene for plant protection must be registered before use of same in the EU.

There has been to date no simple and effective solution for adjusting and controlling an amount of ethylene used in a greenhouse for fruits and vegetables, or other plant life, but such would be desirable for use particularly in the EU for example.

### Disclosure of the present invention: object, solution, advantages

Starting from the disadvantages and shortcomings as described above as well as taking the prior art as discussed into account, an object of the present invention is to overcome the limitations and problems that earlier apparatus and earlier methods have experienced.

This object is accomplished by an apparatus comprising the features of claim 1 as well as by a method comprising the features of claim 7. Advantageous embodiments, expedient improvements and other optional features of the present invention are set forth herein and disclosed in the respective dependent claims.

There is basically provided herein a mobile dosage system for ethylene, in particular in greenhouses or in hothouses; more particularly, there is basically provided herein an apparatus for controlling an amount of ethylene in a space, including a source of the ethylene, a distribution conduit for the ethylene, and a controller for dosing an amount of the ethylene from the conduit into the space in response to a signal of a concentration of ethylene sensed and already present in the space. A related method is also provided.

There is therefore provided herein apparatus and method inventive embodiments for directly regulating an amount of ethylene in a greenhouse or other enclosed space or atmosphere. The inventive embodiments provide direct regulation or dosing of the ethylene from the cylinder containing same, or at a cylinder containing gas mixtures, which may also be connected wirelessly to a sensor positioned in the greenhouse, room, container or space where the ethylene is to be introduced for use.

Feedback from the sensor to a computer or other central processing unit (CPU) to control ethylene dosing can be via cloud storage computing or transmission signals from BLUETOOTH® (BLUETOOTH is a registered trademark of Bluetooth SIG, Inc.) or Wi-Fi® to the cloud telecommunication equipment.

There is therefore provide herein an apparatus for controlling an amount of ethylene (C₂H₄) in a space, comprising:
- a source of the ethylene;
- a distribution conduit having a first end in fluid communication with the source and a second end extending into the space for delivery of the ethylene to the space;
- a sensor exposed to the space for generating a signal of a concentration of the ethylene sensed and already present in the space; and
- a controller in communication with the source and the sensor for dosing an amount of the ethylene from the source through said distribution conduit into the space responsive to the signal from the sensor.

According to an advantageous embodiment of the present invention, the apparatus may further include a valve interposed between the source and the distribution conduit, and operatively connected to the controller, the valve responsive to an order signal from the controller for the dosing of the ethylene.

In an expedient embodiment of the present invention, the apparatus may further include the distribution conduit comprising a pipe.

According to a favoured embodiment of the present invention, the apparatus may further include the pipe being constructed of a material selected from the group consisting of a rigid material, and a flexible material.

In a preferred embodiment of the present invention, the apparatus may further include the pipe comprising a plurality of holes or outlets therein from which the ethylene is introduced to the space.

According to an advantageous embodiment of the present invention, the apparatus may further include a nozzle disposed in at least one of the plurality of holes or outlets.

In an expedient embodiment of the present invention, the apparatus may further include the distribution conduit extending along an upper region of the space.

According to a favoured embodiment of the present invention, the apparatus may further include the space being in a housing selected from the group consisting of a greenhouse, and a hothouse.

In a preferred embodiment of the present invention, the apparatus may further include a second sensor exposed to the space and responsive to light in the space, the second sensor adapted to generate a second signal to the controller for actuating the dosing of said ethylene.

According to an advantageous embodiment of the present invention, the apparatus may further include the, in particular first, sensor and the second sensor constructed as an integral unit.

In an expedient embodiment of the present invention, the apparatus may further include the sensor adapted to generate and transmit the signal to cloud internet computing for actuating the dosing of said ethylene.

According to a favoured embodiment of the present invention, the apparatus may further include the sensor adapted to generate and transmit the signal to cloud internet computing for operating the controller to actuate the dosing of said ethylene.

In a preferred embodiment of the present invention, the apparatus may further include the signal comprising a wireless transmission.

According to an advantageous embodiment of the present invention, the apparatus may further include the ethylene (C₂H₄) being in a mixture comprising another gas selected from the group consisting of carbon dioxide (CO₂), and nitrogen (N₂).

There is also provided herein a method of controlling an amount of ethylene (C₂H₄) in a space, comprising:
- providing a source of ethylene;
- introducing the ethylene into the space;
- sensing a concentration of the ethylene already present in the space for generating a signal of the concentration; and
- controlling a dose of the ethylene introduced into the space responsive to the signal of the concentration present in said space.

In an expedient embodiment of the present invention, the method may further include the controlling the dose is from a location remote from the space.

According to a favoured embodiment of the present invention, the method may further include the controlling is with a device selected from the group consisting of a computer, a laptop, a notebook, a smartphone and/or a tablet.

In a preferred embodiment of the present invention, the method may further include signalling the amount of the ethylene sensed to a controller for the controlling of the dose.

According to an advantageous embodiment of the present invention, the method may further include signalling the amount of the ethylene sensed to cloud internet computing for the controlling of the dose.

In an expedient embodiment of the present invention, the method may further include the controlling the dose of the ethylene comprises adjusting a valve for the introducing of the ethylene.

According to a favoured embodiment of the present invention, the method may further include the space comprising flora, in particular plants, fruits and/or vegetables, and further comprising facilitating ripening of the flora with the dose of the ethylene.

In a preferred embodiment of the present invention, the method may further include the space comprising flora, in particular plants, fruits and/or vegetables, and further comprising inhibiting sprouting of the flora with the dose of the ethylene.

According to an advantageous embodiment of the present invention, the method may further include the ethylene (C₂H₄) being in a mixture, and the mixture further comprises a gas selected from the group consisting of carbon dioxide (CO₂), and nitrogen (N₂).

In an expedient embodiment of the present invention, the method may further include maintaining a constant amount of the ethylene in the space responsive to the signal.

According to a favoured embodiment of the present invention, the method may further include additional sensing of light present in the space for generating a second signal of the light for controlling a dose of the ethylene introduced into the space responsive to the second signal.

In a preferred embodiment of the present invention, the method may further include the additional sensing occurring at an upper region of the space.

According to an advantageous embodiment of the present invention, the method may further include at least one of the first and second signals comprising a wireless transmission.

The present embodiments also substantially reduce, if not eliminate, known safety issues which can occur from the use of ethylene (C₂H₄), especially in closed spaces or rooms, such as for example greenhouses or containers. The present embodiments are also directed to use of ethylene (C₂H₄), carbon dioxide (CO₂) and nitrogen (N₂), and any combination thereof.

### Brief description of the drawings

For a more complete understanding of the present embodiment disclosures and as already discussed above, there are several options to embody as well as to improve the teaching of the present invention in an advantageous manner. To this aim, reference may be had to the claims dependent on claim 1 as well as on claim 7; further improvements, features and advantages of the present invention are explained below in more detail with reference to the particular and preferred embodiments by way of non-limiting example and to the appended drawing figures taken in conjunction with the following description of exemplary embodiments, of which:

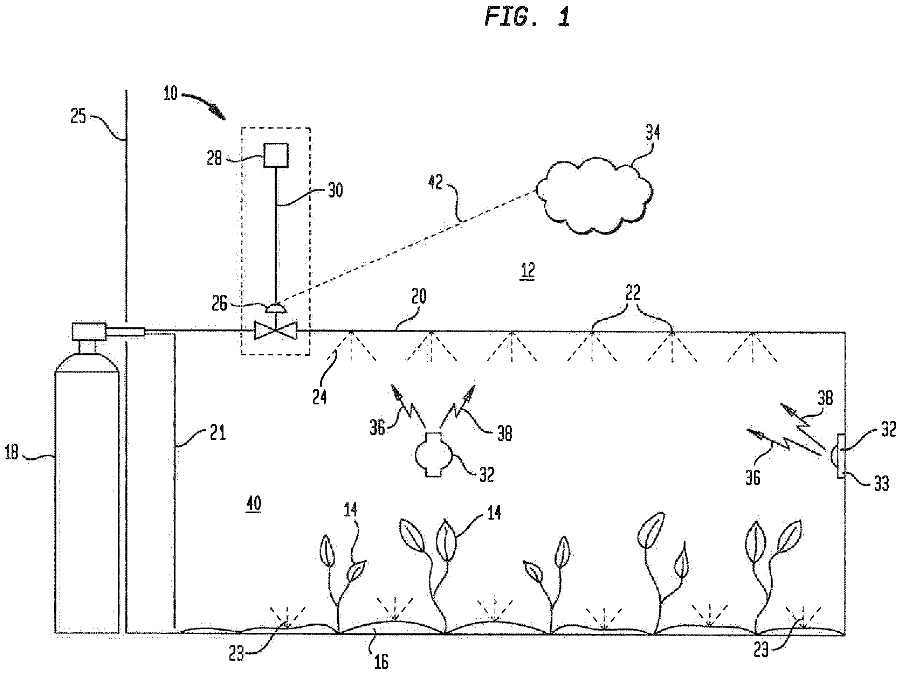

FIG. 1 shows a side cross-section view of a first mobile dosage apparatus embodiment for distribution of ethylene and/or other gases for application to plants such as for example plants, fruits and/or vegetables in a greenhouse, container or other storage room, said first apparatus embodiment working according to the method of the present invention; and

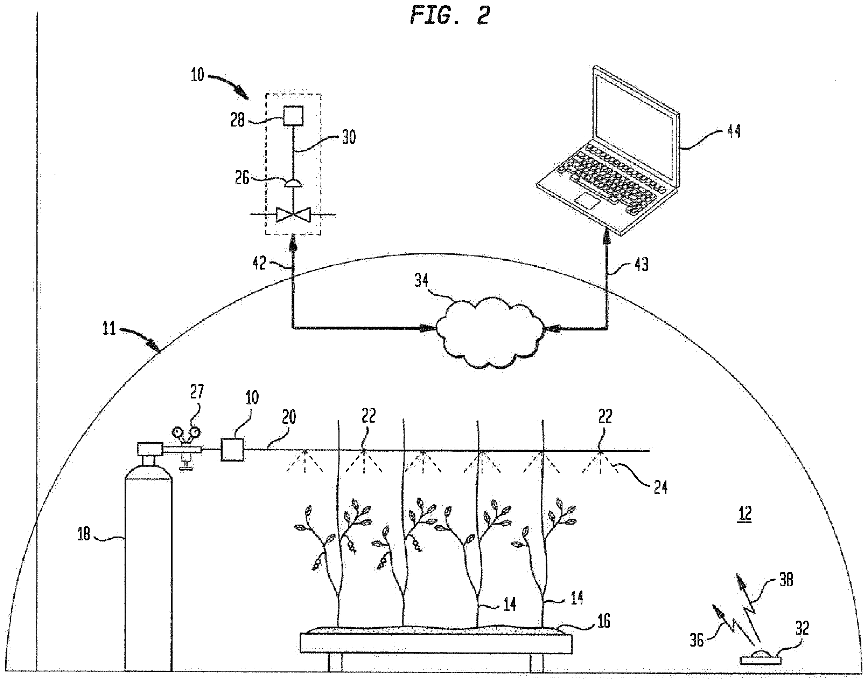

FIG. 2 shows a side cross-section view of a second mobile dosage apparatus embodiment for distribution of ethylene and/or other gases for application to plants such as for example plants, fruits and/or vegetables in a greenhouse, container or other storage room, said second apparatus embodiment working according to the method of the present invention.

The accompanying drawings are included to provide a further understanding of the apparatus and method(s) provided herein and are incorporated in and constitute a part of this specification. The drawings illustrate various embodiments of the apparatus and method(s) provided herein and, together with the description, serve to explain the principles described herein but are not intended to limit the specification or any of the claims.

### Detailed description of the drawings;

### best way of embodying the present invention

Before explaining the present inventive embodiments in detail, it is to be understood that the embodiments are not limited in its respective application to the details of construction and arrangement of parts illustrated in the accompanying drawings, if any, since the present invention is capable of other embodiments and of being practiced or carried out in various ways. Also, it is to be understood that the phraseology or terminology employed herein is for the purpose of description and not of limitation.

In the following description,
(i) terms such as horizontal, upright, vertical, above, below, beneath and the like, are to be used solely for the purpose of clarity illustrating the present invention and should not be taken as words of limitation,
(ii) the term "mobile" means wireless adjustments and controls of the present invention by phone, computer, laptop, notebook, tablet and cloud computing,
(iii) the terms "ripen" and "ripening" refer to a fruit or vegetable already picked,
(iv) the term "sprouting" refers to a plant or vegetable regenerating or sending forth new growth after being picked,
(v) the term "atmosphere" means the composition of a gas in a space or environment for which the present invention is used, and
(vi) the drawings are for the purpose of illustrating the present invention and are not intended to be to scale.

In general, the inventive embodiments include an apparatus having a sensor which provides or transmits signal feedback about the amount and content of ethylene (in a gaseous phase) in an enclosed space, such as for example a greenhouse.

The sensor may also be able to sense light or alternatively, the sensor may include a portion which senses light, in the enclosed space. The light sensor can be used to begin the dosage of ethylene during daytime and/or nighttime hours, as needed.

The present embodiments will regulate a valve (i.e., the valve's open and closed position) responsive to the ethylene content in the air of the greenhouse. Communication by the apparatus to regulate the valve may be done wirelessly, either via cloud computing or BLUETOOTH® telecommunications for example.

The greenhouse operator and/or customer can be made aware of an overview about the dosage of the ethylene in the greenhouse with an application or software on a mobile phone, tablet or laptop, from which the settings of the apparatus embodiments can be further adjusted and controlled.

The present apparatus using ethylene can also be used with gas mixtures of carbon dioxide (CO₂), nitrogen (N₂), and any combination of ethylene (C₂H₄), carbon dioxide (CO₂) and nitrogen (N₂) gas.

The present embodiments prevent unsafe conditions in the greenhouse, because opening of the valve for the ethylene bottle or cylinder in the greenhouse occurs intentionally (not unintentionally), and only as a result of measuring and monitoring an atmosphere in the greenhouse or the space.

In particular, and referring to FIG. 1 and to FIG. 2, an apparatus embodiment for providing ethylene to a greenhouse, container and/or a storage room (hereinafter referred to individually and collectively as a "greenhouse", for the sake of brevity), is shown generally at 10.

The apparatus 10 can be used in the greenhouse 11 or a hothouse for flora 14. Reference to a "hothouse" herein means a greenhouse for tropical plants. The greenhouse 11 includes a space 12 or storage room therein. The flora 14 may be growing in soil 16 at a surface of the space 12, or in soil provided in steps or tiers (FIG. 2) disposed or arranged in the space.

The flora may include pre- or post-harvested fruits or vegetables such as, by way of example only, tomatoes, peppers, bananas, citrus fruits such as oranges for ripening; and sprouts and potatoes for storage regulation to prevent sprouting. There meaning of "soil" as used herein may be any nutritional substance including, by way of example only, liquids or fibrous materials which support the growth of the plants.

Although reference herein has been to ethylene, it is understood that the gas to be provided to the storage room 12 can also include carbon dioxide (CO₂) or nitrogen (N₂) or N₂I, or any combination of ethylene (C₂H₄), carbon dioxide (CO₂) and nitrogen (N₂). The apparatus and method embodiments herein enable one to maintain a constant amount of ethylene in a designated space.

At least a top or ceiling of the storage room may include a transparent wall for light, natural or otherwise, to enter into the room. Some embodiments may have all sidewalls of the storage room be transparent. For storage rooms with a ceiling and sidewalls that prevent light from entering the room (opaque ceiling and sidewalls), artificial lighting may be used at the interior of the storage room.

The apparatus 10 includes a tank 18 or bottle (such as a cylinder or vessel) of ethylene; a conduit 20, such as for example a pipe or a line having a plurality of holes 22 or outlets arranged along the conduit 20 and from which the mixture is sprayed; a valve 26 interposed in the conduit 20; a controller 28 connected by a wire (or wireless) connection 30 to the valve 26 for controlling same; and at least one sensor 32 (at least a first sensor) disposed in the space 12 for generating transmission signals 36, 38.

The apparatus 10 may also include at least one light sensor 33 (at least a second sensor) or alternatively, the at least one sensors 32, 33 may be an integral unit. The at least one sensor 32 is exposed to an atmosphere 40 in the space 12, and the at least one light sensor 33 may be exposed to an upper region of the space 12 proximate the height of the plants, to thereby be sensitive to the actual light that the plants are receiving.

Ethylene is introduced into the space 12 for inclusion in the atmosphere 40 to inhibit sprouting or accelerate ripening of the plants, fruits and/or vegetables 14, depending upon the type of same.

An embodiment of the apparatus 10 may include a conduit 21 being constructed as a flexible pipeline, with another plurality of holes 23 or outlets from which the mixture is sprayed, which can be positioned in a random pattern or layout along the surface of the soil 16.

A pressure regulator 27 is in communication and used with the conduits 20, 21 to control the high pressure of the ethylene coming out of the tank into the conduits 20, 21, as shown for example in FIG. 2.

The tank 18 may be located in the space 12 of the greenhouse (FIG. 2) or alternatively, mounted external to the greenhouse (FIG. 1) such that the conduits 20, 21 extend through a sidewall 25 of the greenhouse 11 and into the space 12 for introducing the ethylene through the holes 22, 23 or outlets into the space 12.

In operation and still referring to FIG. 1 and to FIG. 2, if necessary to inhibit sprouting or if necessary to inhibit accelerated ripening of fruits or vegetables therefrom, the at least one sensor 32 senses an amount of ethylene and light in the space 12 and transmits at least one of the transmission signals 36, 38 to the controller 28 and/or to a cloud 34.

The signals 36, 38 may be transmitted wirelessly. The signal 36 from the sensor 32 can be transmitted wirelessly and directly to the controller 28, whereupon the controller 28 adjusts an opening of the valve 26 to permit the necessary amount of ethylene from the tank 18 into the conduit 20, 21 for distribution from the outlets 22, 23 to the space 12.

Other embodiments of the apparatus 10 may include a nozzle disposed in each one of the outlets 22, 23 for providing the ethylene as a gaseous plume 24 to be introduced into the atmosphere 40.

When a sufficient amount of the ethylene has been introduced into the space 12, such will be sensed by the sensor 32 which will therefore communicate same with the transmission signal 36 to the controller 28 to close the valve 26 a sufficient amount to restrict the ethylene to only that amount necessary to be introduced into the space 12.

Another embodiment may have the sensor 32 providing the transmission signal 38 to the cloud 34. The cloud 34, in turn, can generate a wireless signal 42 to the valve 26 for adjustment thereof. A further embodiment may have the cloud 34 wirelessly transmitting the signal 42 to the controller 28, which will then actuate the valve 26.

As described above, a user may be positioned at a remote location and have wireless access, via BLUETOOTH® for example, to be notified from the controller 28 and/or the cloud 34 as to the disposition of the space 12 and the composition thereof.

The user is able to control the controller 28 from a remote device 44 such as a computer, a laptop, a notebook, a smartphone and/or a tablet or generate commands to the cloud 34 via transmission signal 43 to operate the valve 26 via transmission signal 42 and the amount, or lack thereof, of the ethylene or gas mixtures of it introduced into the conduit 20, 21 and thereafter into the space 12.

The present apparatus and method embodiments may be used with larger greenhouses by installing a plurality of the sensors 32 therein, to stop the gas flow into the greenhouse 11 when the gas exceeds a predetermined level. The number of the sensors 32 used can be determined by the volume of the space 12 and/or circulation characteristics of the atmosphere or a circulation system used therein.

It will be understood that the embodiments described herein are merely exemplary, and that a person skilled in the art may make variations and modifications without departing from the spirit and scope of the present invention. All such variations and modifications are intended to be included within the scope of the present invention as described herein and provided in the appended claims. Further, it should be understood that all embodiments described above and disclosed herein are not necessarily in the alternative as various embodiments of the present invention can be combined, in particular to provide the desired result.

### List of reference signs

- 10: apparatus
- 11: housing, in particular greenhouse or hothouse
- 12: space or storage room
- 14: flora, in particular plants, fruits and/or vegetables
- 16: soil
- 18: source, in particular tank or bottle, for example cylinder or vessel, of ethylene
- 20: conduit, in particular distribution conduit, for example pipe or line
- 21: conduit, in particular flexible pipeline
- 22: hole or outlet in conduit 20
- 23: hole or outlet in conduit 21
- 24: plume, in particular gaseous plume
- 25: sidewall of housing 11
- 26: valve interposed in conduit 20
- 27: pressure regulator
- 28: controller
- 30: connection, in particular wire connection or wireless connection, to valve 26
- 32: sensor, in particular first sensor, disposed in space 12
- 33: light sensor, in particular second sensor
- 34: cloud
- 36: transmission signal, in particular first transmission signal
- 38: transmission signal, in particular second transmission signal
- 40: atmosphere
- 42: transmission signal, in particular wireless signal, from cloud 34
- 43: transmission signal
- 44: device, in particular remote device, for example computer, laptop, notebook, smartphone and/or tablet

## Claims

1. An apparatus (10) for controlling an amount of ethylene (C₂H₄) in a space (12), said space (12) in particular being in a housing (11) selected from the group consisting of a greenhouse and a hothouse, said apparatus (10) comprising:
- a source (18) of the ethylene (C₂H₄);
- a distribution conduit (20), in particular comprising a pipe, said distribution conduit (20) having
-- a first end in fluid communication with the source (18), and
-- a second end extending into the space (12) for delivery of the ethylene (C₂H₄) to the space (12);
- a sensor (32) exposed to the space (12) for generating a signal, in particular comprising a wireless transmission, of a concentration of the ethylene (C₂H₄) sensed and already present in the space (12); and
- a controller (28) in communication with the source (18) and the sensor (32) for dosing an amount of the ethylene (C₂H₄) from the source (18) through said distribution conduit (20) into the space (12) responsive to the signal from the sensor (32).

2. The apparatus according to claim 1, further comprising a valve (26) interposed between the source (18) and the distribution conduit (20), and operatively connected to the controller (28), the valve (26) responsive to an order signal from the controller (28) for the dosing of the ethylene (C₂H₄).

3. The apparatus according to claim 1 or 2, wherein the distribution conduit (20), in particular the pipe,
- is constructed of a material selected from the group consisting of a rigid material, and a flexible material, and/or
- comprises a plurality of holes or outlets (22) therein from which the ethylene (C₂H₄) is introduced to the space (12), said apparatus (10) in particular comprising a nozzle disposed in at least one of the plurality of holes or outlets (22), and/or
- extends along an upper region of the space (12).

4. The apparatus according to at least one of claims 1 to 3, further comprising a second sensor (33) exposed to the space (12) and responsive to light in the space (12), the second sensor (33) adapted to generate a second signal to the controller (28) for actuating the dosing of said ethylene (C₂H₄), with the, in particular first, sensor (32) and the second sensor (33) in particular constructed as an integral unit.

5. The apparatus according to at least one of claims 1 to 4, wherein the sensor (32) is adapted to generate and transmit the signal to cloud internet computing
- for actuating the dosing of said ethylene (C₂H₄) and/or
- for operating the controller (28) to actuate the dosing of said ethylene (C₂H₄).

6. The apparatus according to at least one of claims 1 to 5, wherein the ethylene (C₂H₄) is in a mixture comprising another gas selected from the group consisting of carbon dioxide (CO₂), and nitrogen (N₂).

7. A method of controlling an amount of ethylene (C₂H₄) in a space (12), comprising:
- providing a source (18) of ethylene (C₂H₄);
- introducing the ethylene (C₂H₄) into the space (12);
- sensing (32) a concentration of the ethylene (C₂H₄) already present in the space (12) for generating a signal of the concentration; and
- controlling a dose of the ethylene (C₂H₄) introduced into the space (12) responsive to the signal of the concentration present in said space (12).

8. The method according to claim 7, wherein the controlling the dose is
- from a location remote from the space (12), and/or
- with a device (44) selected from the group consisting of a computer, a laptop, a notebook, a smartphone and/or a tablet.

9. The method according to claim 7 or 8, further comprising signalling the amount of the ethylene (C₂H₄) sensed (32)
- to a controller (28) for the controlling of the dose.
- to cloud internet computing for the controlling of the dose.

10. The method according to at least one of claims 7 to 9, wherein the controlling the dose of the ethylene (C₂H₄) comprises adjusting a valve (26) for the introducing of the ethylene (C₂H₄).

11. The method according to at least one of claims 7 to 10, wherein the space (12) comprises flora (14), in particular plants, fruits and/or vegetables, and further comprises
- facilitating ripening of the flora (14) with the dose of the ethylene (C₂H₄) and/or
- inhibiting sprouting of the flora (14) with the dose of the ethylene (C₂H₄).

12. The method according to at least one of claims 7 to 11, wherein the ethylene (C₂H₄) is in a mixture, and the mixture further comprises a gas selected from the group consisting of carbon dioxide (CO₂), and nitrogen (N₂).

13. The method according to at least one of claims 7 to 12, further comprising maintaining a constant amount of the ethylene (C₂H₄) in the space (12) responsive to the signal.

14. The method according to at least one of claims 7 to 13, further comprising additional sensing (33) of light present in the space (12) for generating a second signal of the light for controlling a dose of the ethylene (C₂H₄) introduced into the space (12) responsive to the second signal, said additional sensing (33) in particular occurring at an upper region of the space (12).

15. The method according to claim 14, wherein at least one of the first and second signals comprises a wireless transmission.
